# EUROPEAN PATENT SPECIFICATION

(11) **EP 2 447 532 B1**
(45) Date of publication and mention of the grant of the patent: **21.03.2018**
(21) Application number: 11187035.8
(22) Date of filing: 28.10.2011
(51) Int. Cl.: F04B 43/12, F16L 23/00, F04B 43/00

(54) **Clamping ring for peristaltic pumps**
Klemmring für peristaltische Pumpen
Bague de serrage pour pompes péristaltiques

(30) Priority: 28.10.2010 ES 201001384
(43) Date of publication of application: 02.05.2012
(73) Proprietor: Bombas Boyser, S.L., 08187 Santa Eulalia de Ronçana, Barcelona (ES)
(72) Inventor: Jofresa Barbany, Joan, 08187 Santa Eulalia de Ronçana, Barcelona (ES)
(74) Representative: Gallego Jiménez, José Fernando

(56) References cited:
- GB-A- 1 185 766
- GB-A- 1 299 354
- GB-A- 2 272 248
- US-A1- 2004 245 766
- US-B1- 6 220 635

## Description

### Object of the Invention.

The present invention relates to a clamping ring for peristaltic pumps that provides essential novelty features and considerable advantages with respect to the means known and used for the same purposes in the state of the art.

More particularly, the invention develops a clamping ring of the type that is incorporated within the joints or couplings of fluid pipes, specially (but not exclusively) designed for use in connection with peristaltic pumps, the ring body of which has a cross-section with a double taper of rounded profile, with regard to both ends, which allows close coupling under a certain pressure with the clamping flange element, the ring consisting of several independent, separate unit cylinder portions, which are configured and made so as to allow a mutual coupling between them in order to form a whole cylindrical configuration of the ring, each of these portions having, on their outer surface, a groove supporting the inclusion of an O-ring or elastic spring holding the different portions mutually interlinked in the ring when in its assembled condition.

The field of application of the invention is comprised in the industrial sector dedicated in general to the manufacture of pumps for liquids, especially in the manufacture of peristaltic pumps and their coupling elements between the inner hose and output pipes.

### Background and Summary of the invention.

Those skilled in the art are aware of the need of using clamping joining rings for fixing peristaltic hoses to the pump body and their joints, in order to ensure the consistency of the fixation of the joints, pressure resistance and durability.

Currently, there are various types of joint rings performing the functions referred to above, although their configuration or the configuration of the associated flanges lead to, in practice, the existence of some drawbacks making that both their operational capacity and the assembly and disassembly operations can not be carried out in optimal conditions and in a repetitive way.

Given the above, the main object of the present invention is to design and develop a clamping ring with substantially improved operational characteristics over current rings with which to provide solutions to the drawbacks mentioned above. This aim has been fully achieved with the clamping ring object of the following description, which main characteristics are contained in the characterizing portion of the attached claim 1.

In essence, the ring proposed by this invention comprises a cylindrical body divided into several cylinder portions that are coupled to one another on a whole to provide the desired cylindrical configuration, each and every one of the portions presenting on its outer surface the conformation of a groove in respectively opposing matching positions, the groove being dimensioned to receive and accommodate the insertion of an O-ring or elastic ring holding the multiple portions in the coupled condition when the clamping ring is operational. The cylindrical body finishes at both ends with a certain taper with a slightly curved profile, while the clamping flange area also shows, in the coupling area with the first, a complementary configuration that facilitates the mutual adaptation of both elements and a more uniform distribution of effort associated with the clamping action of said flange. The latter also includes an O-ring which ensures the tightness of the joint.

With a clamping ring configured in the manner explained above, the assembly and disassembly operations can be performed more quickly, more simply, and as often as desired without adversely affecting the properties of the ring.

GB 1 185 766 A, GB 2 272 248 A, US 6 220 635 B1, GB 1 299 354 A and US 2004/245766 describe different couplings and connectors that constitute part of the background art.

### Brief Description of Drawings.

These and other features and advantages of the invention will become more apparent from the following detailed description of a preferred embodiment thereof, given only by way of illustration and not limitation, with reference to the accompanying drawings, wherein:
Figure 1 is a perspective schematic view of a clamping ring made according to the invention;
Figure 2 is a schematic exploded side elevation, longitudinally sectioned view, of the elements involved in the creation of a joint between a pump and a pipe, with the interposition of the ring of Figure 1, and
Figure 3 also illustrates a schematic view in side elevation and longitudinal section of the joint elements of Figure 2 in the assembled condition.

### Description of a Preferred Embodiment.

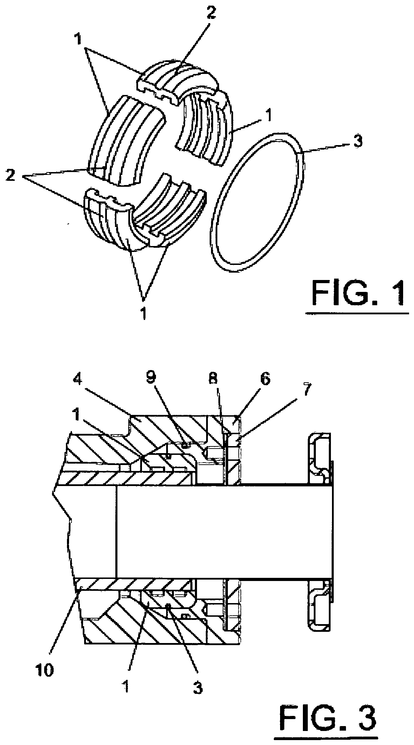

As mentioned herein above, the following detailed description will be made with the help of the accompanying drawings, through which the same reference numerals are used to designate the same or similar parts. Thus, considering the representation of Figure 1 first, a schematic perspective view can be seen of a clamping ring which generally shows a cylindrical configuration, consisting of various portions 1, consisting of cylinder portions able to be coupled to one another to configure the ring as a whole. The inner sides of each of the portions have ribbed surfaces to provide them with increased stiffness and better clamping without slippage of the hose made of elastomer material, while the outer surface of each portion is transversely crossed by a groove 2, which has in every portion a position equivalent to that of the other portions. These grooves 2 are dimensioned to accommodate an O-ring or elastic spring 3, by which the different portions remain connected in a ring "assembled" condition.

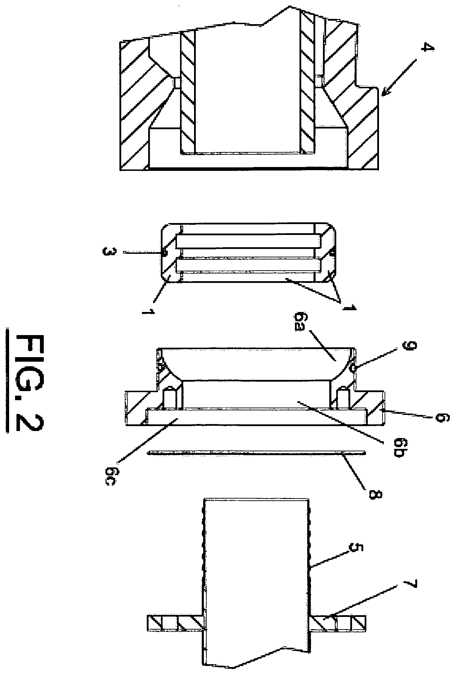

As mentioned above, the ends of the clamping ring have a certain taper, or in general, a curvature of predetermined development, as can be appreciated in greater detail in the exploded representation of Figure 2, wherein the different sectioned components of the joint appear following the longitudinal direction. Along with the clamping ring formed by the various cylindrical portions 1, Figure 2 shows a portion 4 of the pump body corresponding to the output portion of the latter in which the joining with an external pipe 5 is to be done with the aid of a clamping flange 6. This flange 6 has a central through-hole formed by the respective sections with clearly distinct configurations: the first section of larger diameter, which shows an inner surface or first section 6a with a tapered, rounded profile complementary to that shown by the corresponding end of the clamping ring, and a second section 6b with a clearly cylindrical form to house and allow the passage of the corresponding end of the pipe 5. The latter includes a connecting external flange 7 dimensioned to be housed within a housing 6c on the clamping flange 6 with the interposition of a flat ring indicated with the numeral 8, as usual. The clamping flange 6 further includes a sealing O-ring 9 housed in a perimeter recess made for this purpose on the outer surface of the flange body.

According to this arrangement, the clamp ring assembly at the outlet of a pump 4 for the realization of a joint between said pump and a distribution pipe 5 of a fluid driven by said pump is carried out as depicted in the schematic view shown in longitudinal section in Figure 3 of drawings. According to said arrangement, the "assembled" clamping ring, consisting of the various cylinder portions 1 interconnected through the O-ring 3, appears coupled to the outer surface of the driving pump tube 10, with the inner end of the ring abutting the corresponding surface of the inside of the pump body 4 with a linear contact facilitated by the approximately conical rounded form of said inner end of the ring, the very inner surface of the pump body being the responsible for limiting the insertion of the clamping ring. At the other end, the clamping flange 6 is perfectly coupled to the ring thanks to the complementary configuration of the respectively facing adjacent surfaces, and with the pipe inserted into the inside of the driving tube 10 after passing through the flange 6 and the clamping ring itself. The external flange 7 of said pipe 5 is also inserted to the housing 6c of the clamping flange 6, with the interposition of a flat gasket 8, as previously said, and the relative tightness being guaranteed by the seal 9.

With this arrangement, the clamping ring ensures an easy, convenient and fast assembly/disassembly of the different elements of the joint, in a repetitive way as many times as necessary without risk of damage to any of them.

As defined throughout this description, the clamping ring is composed of several cylinder portions which are successively attachable to one another. In the representation in Figure 1, there is a total of 5 portions arranged one after the other, keeping a short separation, forming together the desired cylindrical configuration. As it will be understood, the number of portions 1 which divides the cylinder constituting the clamping ring can be variable, so the representation of Figure 1 should be read as illustrative only, for the purpose of a better understanding of the invention

It is not considered necessary to extend the content of the present description in order for one skilled in the art to understand the scope and the benefits derived thereof, nor to carry out the practical realization of its object.

## Claims

1. A clamping ring assembly used with a peristaltic pump (4) comprising:
a pipe (5) carrying a fluid driven from the peristaltic pump and said pipe (5) having an external flange (7); a clamping flange (6) having a cylindrical hole section (6b) for the passage of said pipe and including a housing (6c) configured and dimensioned to receive and hold said external flange (7) of said pipe (5); a flat gasket (8) interposed between said pipe and said clamping flange, **characterized in that**:
- a body of the clamping ring assembly is formed by a variable number of cylinder portions (1) coupled to one another to configure the clamping ring body as a whole, an outer surface of each cylinder portion of the variable number of cylinder portions (1) being transversely crossed by a groove (2) which has in each cylinder portion of the variable number of cylinder portions (1) a position equivalent to that of other cylinder portions and which is sized to internally receive and hold an O-ring (3) that holds the variable number of cylinder portions mutually connected in an operating condition of the assembled clamping ring;
- the ends of the body of the clamping ring assembly having a taper of rounded profile, so that an inner end is coupled closely with an inside of the peristaltic pump (4) in which said body of the clamping ring assembly is located and an outermost end engages an inner complementary configured surface of a first section (6a) of said clamping flange (6) having a larger diameter than said cylindrical hole section (6b).

## Patentansprüche

1. Klemmringbaugruppe zur Verwendung mit einer peristaltischen Pumpe (4), umfassend: eine Leitung (5), die ein Fluid führt, das von der peristaltischen Pumpe angetrieben wird, und wobei die Leitung (5) einen Außenflansch (7) aufweist;
einen Klemmflansch (6), der einen zylindrischen Lochabschnitt (6b) für den Durchtritt der Leitung aufweist und ein Gehäuse (6c) umfasst, das konfiguriert und dimensioniert ist, um den Außenflansch (7) der Leitung (5) aufzunehmen und zu halten; eine Flachdichtung (8), die zwischen der Leitung und dem Klemmflansch eingefügt ist, **dadurch gekennzeichnet, dass**:
- ein Körper der Klemmringbaugruppe von einer variablen Anzahl von Zylinderabschnitten (1) gebildet wird, die aneinandergekoppelt werden, um den Klemmringkörper als Ganzes zu konfigurieren, wobei eine Außenfläche jedes Zylinderabschnitts der variablen Anzahl von Zylinderabschnitten (1) von einer Rille (2) quer durchzogen wird, die in jedem Zylinderabschnitt der variablen Anzahl von Zylinderabschnitten (1) eine Position aufweist, die derjenigen der anderen Zylinderabschnitte entspricht und die so bemessen ist, dass sie im Inneren einen O-Ring (3) aufnehmen und halten kann, der die variable Anzahl von Zylinderabschnitten in einem Betriebszustand des zusammengesetzten Klemmrings miteinander verbunden hält;
- die Enden des Körpers der Klemmringbaugruppe ein sich verjüngendes gerundetes Profil aufweisen, so dass ein inneres Ende eng mit einer Innenseite der peristaltischen Pumpe (4) gekoppelt ist, in der der Körper der Klemmringbaugruppe angeordnet ist, und ein äußerstes Ende in eine innere komplementär konfigurierte Fläche eines ersten Abschnitts (6a) des Klemmflansches (6) eingreift, der einen größeren Durchmesser als der zylindrische Lochabschnitt (6b) aufweist.

## Revendications

1. Ensemble de bague de serrage utilisé avec une pompe péristaltique (4) comprenant: un tuyau (5) transportant un fluide entraîné par la pompe péristaltique et ledit tuyau (5) présentant une bride externe (7);
une bride de serrage (6) présentant une section de trou cylindrique (6b) pour le passage dudit tuyau et incluant un logement (6c) configuré et dimensionné pour recevoir et contenir ladite bride externe (7) dudit tuyau (5); un joint plat (8) interposé entre ledit tuyau et ladite bride de serrage, **caractérisé en ce que**:
- un corps de l'ensemble de bague de serrage est formé par un nombre variable de portions de cylindre (1) couplées les unes aux autres pour configurer le corps de bague de serrage dans son ensemble, une surface extérieure de chaque portion de cylindre du nombre variable de portions de cylindre (1) étant traversée transversalement par une rainure (2) qui possède dans chaque portion de cylindre du nombre variable de portions de cylindre (1) une position équivalente à celle d'autres portions de cylindre et qui est dimensionnée pour recevoir et contenir en interne un joint torique (3) qui contient le nombre variable de portions de cylindre raccordées mutuellement dans un état de fonctionnement de la bague de serrage assemblée;
- les extrémités du corps de l'ensemble de bague de serrage présentant un effilement de profil arrondi de sorte qu'une extrémité intérieure soit étroitement couplée avec un intérieur de la pompe péristaltique (4) dans laquelle ledit corps de l'ensemble d'anneau de serrage est situé et une extrémité extérieure met en prise une surface intérieure configurée de manière complémentaire d'une première section (6a) de ladite bride de serrage (6) présentant un diamètre plus grand que ladite section de trou cylindrique (6b).
